# EUROPÄISCHE PATENTSCHRIFT

(11) **EP 2 380 181 B1**
(45) Veröffentlichungstag und Bekanntmachung des Hinweises auf die Patenterteilung: **22.07.2015**
(21) Anmeldenummer: 09771329.1
(22) Anmeldetag: 07.12.2009
(51) Int. Cl.: H01G 9/012, H01G 9/042, H01G 9/052

(54) **KONDENSATORANODE**
CAPACITOR ANODE
ANODE DE CONDENSATEUR

(30) Priorität: 19.12.2008 DE 102008063853
(43) Veröffentlichungstag der Anmeldung: 26.10.2011
(73) Patentinhaber: H.C. Starck GmbH, 38642 Goslar (DE)
(72) Erfinder: OTTERSTEDT, Ralph, 38642 Goslar (DE); GOTTSCHLING, Marianne, 38640 Goslar (DE)
(86) Internationale Anmeldenummer: PCT/EP2009/066513
(87) Internationale Veröffentlichungsnummer: WO 2010/079029

(56) Entgegenhaltungen:
- EP-A2- 1 818 956
- WO-A1-2006/117787
- US-A1- 2003 026 756
- US-A1- 2003 104 923
- US-A1- 2005 013 765
- US-A1- 2005 018 384
- US-A1- 2008 232 030
- US-B1- 6 439 115
- US-B1- 6 493 213
- US-B1- 6 510 044
- LIN ET AL: "The rheological behaviors of screen-printing pastes" JOURNAL OF MATERIALS PROCESSING TECHNOLOGY, ELSEVIER, NL LNKD- DOI:10.1016/J.JMATPROTEC.2007.06.067, Bd. 197, Nr. 1-3, 14. Dezember 2007 (2007-12-14), Seiten 284-291, XP022390755 ISSN: 0924-0136

## Beschreibung

Die vorliegende Erfindung betrifft eine Festelektrolytkondensatoranode auf Basis NbO sowie ein Verfahren zu deren Herstellung.

Festelektrolytkondensatoren mit einem Dielektrikum aus Niob- oder Tantalpentoxid haben in der Elektronikindustrie breite Anwendung gefunden. Sie beruhen auf der hohen Dielektrizitätskonstanten von Niob- und Tantalpentoxid, die in derartigen Kondensatoren die Isolatorschicht bildet. Die Herstellung der Anoden erfolgt durch Versintern von feinteiligen porösen Agglomeraten von Tantal- bzw. Niob-Primärteilchen zu porösen Anodenkörpern mit entsprechend großer Oberfläche, wobei die Agglomerate vor der Versinterung zu forrnstabilen Presskörpern verarbeitet werden, die dann über 10 bis 30 Minuten im Hochvakuum bei einer Temperatur von 1000 bis 1500°C gesintert werden. Auf der Oberfläche der Sinterkörper (Anoden) wird dann durch elektrolytische Oxidation die Pentoxidschicht erzeugt, deren Dicke durch die Maximalspannung der elektrolytischen Oxidation (Formierspannung) bestimmt ist. Die Kathode wird durch Tränken der schwammartigen Struktur mit Mangannitrat, das thermisch zu Mangandioxid umgesetzt wird, oder mit einem flüssigen Vorläufer eines Polymerelektrolyten und Polymerisation oder einer Polymerdispersion eines leitfähigen Polymers, erzeugt.

Prinzipiell ist auch Niobsuboxid, NbOₓ, wobei x = 0,5 bis 1,7 ist, aufgrund seiner hohen Leitfähigkeit als Anodenmaterial geeignet. Entsprechend hat es in neuerer Zeit verschiedene Vorschläge zum Einsatz von NbO als Ersatz für Nb- oder Ta-Metall als Anodenmaterial gegeben. So ist die Herstellung von Kondensatorelektroden auf der Basis von NbOₓ etwa aus US 2008/232030 A1 bekannt. Gemäß dem dort beschriebenen Verfahren werden aus keramischen Nb₂O₅-Pulvern zunächst Grünkörper hergestellt, die nach dem Sintern und Entbindern unter Wasserstoff zu NbOₓ konvertiert werden können.

Der industrielle Einsatz von NbO als Anodenmaterial scheitert bisher jedoch daran, dass daraus hergestellte Kondensatoren einen zu hohen Reststrom aufweisen und eine in gleicher Weise hergestellte Anodengesamtheit eine extrem breite Verteilung des spezifischen Reststroms zeigt. Eine Vielzahl von Kondensatoren aus einem Produktionsbatch neigen zu Spannungsdurchbrüchen, die diese unbrauchbar machen.

Der Grund für die schlechte Performance von Kondensatoren mit NbO-Anoden scheint in einer durch das Herstellungsverfahren erzeugten Defektstruktur zu liegen: NbO ist im Gegensatz zu den duktilen Metallen Nb und Ta eine vergleichsweise spröde Oxidkeramik, die während der Formgebung der Anode offenbar Defekte, wie z.B. in Form von Mikrorissen, erleidet, die auch beim Sintern nur unvollständig ausheilen.

Es wurde gefunden, dass derartige Defekte nicht auftreten, wenn die Formgebung des Anodenkörpers vor dem Sintern drucklos erfolgt. So sind aus EP 1 818 956 A2 und WO 2006/117787 A1 hochkapazitive Kondensatoranoden bekannt, die aus nicht-agglomerierten Partikeln elektrisch leitfähiger Pulver bestehen. Zur Herstellung der Elektroden werden die agglomerierten Partikel eines herkömmlichen Pulvers zunächst vereinzelt und dann suspendiert oder zunächst suspendiert und dann vereinzelt. Die Suspension mit den vereinzelten Partikeln wird dann in einer elektrophoretischen Abscheidung auf einem metallischen Elektrodensubstrat abgeschieden.

Die Erfindung beinhaltet daher ein Verfahren zur Herstellung einer Festelektrolytkondensatoranode aus vorversintertem feinteiligem Pulver aus NbOₓ, mit x = 0,5 bis 1,7, vorzugsweise x = 0,7 bis 1,3, durch Formung eines Anodengrünkörpers aus dem Pulver und Sintern des Grünkörpers zu einem Anodenkörper, bei dem die die Formung des Grünkörpers im wesentlichen ohne Anwendung von Druck erfolgt.

Der Gegenstand der Erfindung ist ein Verfahren zur Herstellung eines Festelektrolytkondensators durch Formieren des erfindungsgemäßen Anodenkörpers und Versehen des formierten Anodenkörpers mit einer Kathode.

Nach einer nicht von der Erfindung abgedeckten Idee kann das NbOₓ-Pulver in einer inerten Flüssigkeit, vorzugsweise in Wasser, aufgeschlämmt, auf ebene oder Löffel-, Schiffchen- oder Tonnen-förmig gestanzte Niob- oder Tantalmetallfolien aufgebracht bzw. eingefüllt, durch Rütteln mittels Ultraschall verdichtet, getrocknet und gesintert werden.

Vorzugsweise kann die Aufbringung des NbOₓ-Pulvers nach diesem Verfahren aus einer verdünnten Suspension durch Sedimentation erfolgen. Dabei wird die Niob- oder Tantalfolie durch ein Suspensionsbad geführt, so dass das Pulver auf der Folie bzw. in den oben beschriebenen Strukturen sedimentiert. Vorzugsweise wird eine wässrige Suspension eingesetzt. Die Konzentration von NbOₓ-Pulver soll vorzugsweise weniger als 50g/l, besonders bevorzugt weniger als 10g/l, weiter bevorzugt zwischen 2 und 8 g/l, betragen. In die Suspension wird kontinuierlich in dem Maße, wie auf der Folie sedimentiertes Pulver mit dieser ausgetragen wird, zugeführt. Nach einer anfänglichen Einstellungsphase hat sich in der Suspension eine solche Pulverteilchengrößenverteilung eingestellt, aus der gerade eine solche Teilchengrößenverteilung sedimentiert, die der Teilchengrößenverteilung des zugeführten Pulvers entspricht, so dass Segregationseffekte im wesentlichen nicht auftreten. Nach der Herausführung der durch Sedimentation des Pulvers beschichteten Folie wird diese über eine Ultraschalleinrichtung geführt, durch die die sedimentierte Pulverschicht verdichtet wird. Die feuchte verdichtete Pulverschicht wird getrocknet. Im Falle einer wässrigen Suspension ist eine Trocknung bei von 60 bis 80°C auf 150 bis 180°C über einen Zeitraum von mehreren Stunden ansteigende Temperatur bevorzugt.

Als NbOₓ-Pulver wird bevorzugt vorversintertes Pulver mit einer mittleren Primärteilchengröße von 200 bis 1000 nm, weiter bevorzugt 400 bis 800 nm (visuell aus REM-Aufnahmen bestimmt) eingesetzt. Die Sekundärteilchengröße (die Größe der versinterten Primärteilchen) liegt bevorzugt im Bereich von 100 bis 180 µm (bestimmt als D50-Wert nach Mastersizer, ASTM B 622). Die Sekundärteilchengrößenverteilung nach Mastersizer ist vorzugsweise durch D10 = 30 bis 70 µm, D50 = 100 bis 180 µm und D90 = 200 bis 300 µm definiert. Die Sekundärteilchen können eine sphärische oder irreguläre Form aufweisen. Bevorzugt ist eine irreguläre Form, die nach Sedimentation und Ultraschallverdichtung einen stabileren Kuchen ergeben.

Abweichend hiervon wird zur Realisierung der Erfindung nun die Formung durch Auftrag einer das NbOₓ-Pulver enthaltenden Paste auf die Niob- oder Tantalfolie vorgeschlagen.

Derartige Verfahren zu. Erzeugung von Anoden-Grünkörpern wurden im Zusammenhang mit der Nb- und Ta-Metall-Anodentechnik bereits in Form von Siebdruck-, Schablonendruck-, Tintenstrahldruck- und Tauchformungsverfahren vorgeschlagen, um dünne Strukturen zu erzeugen. US 3,465,426 beansprucht eine Methode zur Herstellung von KondensatorAnoden, bei der die Anode durch Pulverformgebung auf einer Folie hergestellt wird.

EP1114430B1 beansprucht beispielsweise eine spezielle Paste zur Herstellung von gesinterten Refraktärmetallschichten.

EP 1208573B1 beansprucht Anoden für Elektrolyt-Kondensatoren, bei dem der Anodenkörper aus kontinuierlich verformbaren Material, das verfestigt werden kann, besteht.

Bei diesen Verfahren kommt eine Paste aus dem feinteiligen Nb- oder Ta-Pulver und einem organischen Bindemittel zum Einsatz, die auf eine Unterlage aus Nb- oder Ta-Blech aufgebracht und getrocknet wird. Anschließend wird durch eine erste Temperaturbehandlung das organische Bindemittel entfernt und danach gesintert.

Diese Verfahren haben den Nachteil, dass während der Entfernung des organischen Bindemittels eine Dotierung des Anodenmaterials mit Kohlenstoff erfolgt. Trotz im Laufe der Zeit verbesserter Pastenrezepturen gelingt es nicht, den Kohlenstoffgehalt im Kondensator unter 150 ppm zu bringen. Kohlenstoff wird jedoch mit unerwünscht hohen Leckströmen in Verbindung gebracht. Das Verfahren hat daher keine technische Verbreitung gefunden.

Es wurde gefunden, dass eine Kohlenstoffdotierung bei Einsatz von NbOₓ-Pulver in derartigen Pasten zur Kondensatorherstellung nicht stattfindet. Offenbar kann der Kohlenstoff aufgrund des vorhandenen Sauerstoffs spätestens beim Sintern vollständig entfernt werden.

Gemäß der vorliegenden Erfindung erfolgt die Formung durch Aufbringen einer Paste mit organischem Bindemittel auf ein flächig ausgebildetes Niob- oder Tantalblech, Trocknen der Paste und Entfernen des Bindemittels durch Erhitzen auf eine Temperatur im Bereich von 1150 bis 550°C.

Bevorzugt wird die Formung der Anodenstruktur mittels Paste durch ein Schablonendruckverfahren durchgeführt. Hierzu wird auf die einen flächigen Anodenkontakt bildende Niob- oder Tantalfolie eine mit Ausschneidungen versehene Schablone aufgelegt und die Paste mittels einer Rakel in die Ausschneidungen der Schablone eingearbeitet. Die Ausschneidungen der Schablone haben die Form der gewünschten Flächenausdehnung der Anode, beispielsweise Rechtecke mit Abmessungen von einigen Millimetern in beiden Richtungen. Die Dicke der Schablone gibt angenähert die Dicke der späteren Anodenstruktur vor. Die Dicke der Schablone kann zwischen 50 und 500 µm, bevorzugt zwischen100 und 300 µm, betragen.

Andere Verfahren zur Herstellung von Kondensatoren mit geringen Restströmen sind im Stand der Technik bekannt. So ist in US 2005/013765 A1 ein Verfahren beschrieben, in dem NbOx-Pulver, die mit definierten Mengen Magnesium, Molybdän und/oder Wolfram dotiert sind, zu Anoden verpresst, aus denen sich dann Kondensatoren mit geringen Restströmen herstellen lassen.

Gegenstand der Erfindung sind auch flächig ausgedehnte Anoden, wobei die Anode aus einer schwammartig versinterten Struktur aus Niobsuboxid NbOₓ mit 0,5 < x < 1,7 besteht und die eine entsprechend flächig ausgedehnte Anodenkoniaktfläche aus Niob und/oder Tantal aufweist, wobei der Kohlenstoffgehalt der Anodenstruktur weniger als 25 ppm. vorzugsweise weniger als 15 ppm, insbesondere bevorzugt weniger als 10 ppm beträgt.

Festelektrolytkondensatoren mit der oben beschriebenen Anode weisen häufig einen spezifischen Reststrom von weniger als 0,4 nA/µFV auf.

Nachfolgend werden insbesondere für das Schablonendruckverfahren geeignete Pasten beschrieben.

Als Bindemittel werden vorzugsweise Kohlenwasserstoffe, insbesondere Cellulosen wie Ethylcellulose N7, N20, N100, N200 oder N300 oder

Hydroxypropylcellulose der Typen Klucel H, Klucel M oder Klucel G der Fa. Hercules, eingesetzt. Andere geeignete Bindemittel sind Polysacharide, Hemizellulosen, Acrylate, Polyester-Polyurethane, Polyether-Polyurethane, Harnstoff-Polyurethane, Polyvinylalkohole und binäre oder multinäre Mischungen daraus.

Je nach Verträglichkeit werden die Bindemittel vorzugsweise in einem Lösungsmittel wie Terpineol, Glykolen wie z.B. Ethylenglykol, 1,2-Propylenglykol, Butylglykol, Triehtylenglykol, oder auch in Wasser, ggf. bei leicht erhöhter Temperatur, gelöst.

Weiterhin können dem Bindemittel oberflächenaktive Substanzen (Netzmittel, Entschäumer) wie Surfinol 104 (Fa. Air Products) oder 2-[2-(2-Methoxyethoxy)ethoxy]essigsäure (Fa. Sigma-Aldrich) oder Byk 024 (Fa. BYK-Gardner) hinzugefügt werden, und/oder rheologische Additive wie Rheolate 244 (Fa. Elementis Specialities).

Als NbOₓ-Pulver werden bevorzugt sphärische Sekundärpulver mit einer maximalen Teilchengröße von 40 µm eingesetzt. Besonders bevorzugt sind dabei Teilchengrößenverteilungen von D10 = 0,5 bis 1,5 µm, D50 = 1,5 bis 3 µm und D90 = 7 bis 12 µm. Die mittlere Primärteilchengröße kann bei 200 bis 600 nm liegen.

Das NbOₓ-Pulver wird in das Bindersystem eingearbeitet und auf einem Dreiwalzenstuhl homogenisiert. Zur leichteren Benetzung kann das Pulver vor der Einarbeitung in einer Netzmittellösung aufgeschlämmt werden. Der Feststoffgehalt der Paste beeinflusst auch deren Viskosität. Er beträgt mindestens 70 und höchstens 87 Gew.-%, bevorzugt 75-85 Gew.-% der Gesamtformulierung.

Nach der Homogenisierung der Pasten sind Pasten mit einer aus der Fließkurve im Scherratenscan (Rotationsmethode) zwischen 10 und 50 s⁻¹, aufgenommen mit einem Kegel-Platte Meßsystem mit 4° Winkel und 20 mm Durchmesser, ermittelten Viskosität von 80 bis 100 Pas bei 10 s⁻¹ und 3,5 bis 10 Pas bei 50 s⁻¹ für das Schablonendruckverfahren besonders geeignet. Erfindungsgemäße Pasten zeichnen sich ferner dadurch aus, dass deren rheologische Charakteristika, gekennzeichnet durch den Fließpunkt, den elastischen und viskosen Anteil der komplexen Viskosität im linearviskoelastischen Bereich sowie das Ausmaß deren Verringerung bei Auferlegen einer Scherbeanspruchung bzw. deren Ansteigen bei Rücknahme einer Scherbeanspruchung (thixotrope Eigenschaften), so eingestellt sind, dass Anoden mit ausreichend steilen Kanten und ebener Oberfläche resultieren. Der Fließpunkt wird im Oszillationsmodus des Rheometers bei 1 Hz mit einer Platte-Platte-Geometrie schubspannungsgeregelt ermittelt. Definitionsgemäß ist der Fließpunkt überschritten, wenn der elastische Anteil der komplexen Viskosität nicht mehr unabhängig von der Schubspannung ist, d.h. mit steigender Schubspannung abfällt. Der Wert der Schubspannung, bei dem gerade noch kein Absinken des elastischen Anteils festzustellen ist, wird als Fließpunkt festgelegt.

Am Fließpunkt beträgt der elastische Anteil der Viskosität bei erfindungsgemäßen Pasten 500 - 15000 Pas, bevorzugt 750 - 7500 Pas und besonders bevorzugt 1000 - 5000 Pas. Der viskose Anteil erfindungsgemäßer Pasten ist am Fließpunkt mindestens 0,5 und höchstens 1,5-fach, bevorzugt mindestens 0,75 und höchstens 1,25-fach und besonders bevorzugt mindestens 0,9 und höchstens 1,1-fach so groß wie der elastische Anteil der Viskosität am Fließpunkt.

Für die Anwendung im Schablonendruck ist das rheologische Verhalten der Paste bei Scherbeanspruchung sowie nach Beenden der Scherbeanspruchung (thixotrope Eigenschaften) für die Qualität des Druckbildes entscheidend. Durch die Scherbeanspruchung wird die die Pseudoplastizität der Paste bewirkende Struktur, deren Stärke durch den elastischen Anteil der Viskosität am Fließpunkt gekennzeichnet ist, abgebaut. Bei erfindungsgemäßen Pasten wird der elastische Anteil bei einer dreifach höheren Schubspannung als am Fließpunkt um 50%, bevorzugt um 75% und besonders bevorzugt um 90% abgebaut. Der viskose Anteil sinkt bei einer dreifach höheren Schubspannung als am Fließpunkt dabei erfindungsgemäß auf unter 2500 Pas, bevorzugt auf unter 1000 Pas und besonders bevorzugt auf unter 500 Pas.

Nach Zurücknehmen der Schubspannung auf den Wert am Fließpunkt baut sich die Struktur der Paste wieder auf. Erfindungsgemäß sind nach 5 Sekunden mindestens 25 und höchstens 90%, bevorzugt 50 - 80% der Struktur (d.h. des elastischen Anteils der Viskosität vor Überschreiten des Fließpunktes) wieder aufgebaut. Der viskose Anteil der komplexen Viskosität ist nach dem Zurücknehmen der Schubspannung erfindungsgemäß mindestens 1,25-fach bis höchstens 10-fach, bevorzugt 2 bis 5-fach größer als der elastische Anteil der komplexen Viskosität.

Die Steilheit der Anodenkanten ist für die Raumausnutzung der rechteckigen Standard-Kondensatorgeometrien von Bedeutung und sollte daher nicht zu flach sein. Eine sehr scharfe Kante, wie sie normalerweise beim Pressen von Anoden resultiert ist insofern nachteilig, als dass die Passivierung und Beschichtung dieser Kante zusätzlichen Aufwand (z.B. eine sog. Core-shell-Passivierung) nach sich zieht.

Als dimensionsloses Maß M für die Steilheit einer Kante einer Anode der Höhe H, gedruckt auf ein ebenes Blech, wird die senkrecht zur Kante gemessene Strecke S zwischen dem Punkt, wo sich die Anode signifikant von der Blechebene abzuheben beginnt und dem Punkt, wo mindestens die mittlere Anodenendhöhe H erreicht ist, normiert auf die mittlere Anodenendhöhe H definiert.

Dieses dimensionslose Maß H/S entspricht der mittleren Steigung der Kante. Beträgt dieses Maß, d.h. die mittlere Steigung, eins, bedeutet das, dass die Strecke genauso lang ist wie die Anode hoch ist. Beträgt das Maß zwei, ist die Strecke halb so lang wie die Anode hoch ist. Für eine senkrechte Kante ist das Maß nicht definiert bzw. ist "unendlich".

Da das Profil der Kante mit einer endlichen Schrittweite s des Laserprofilometers gemessen wird, beträgt das Maß maximal H/s. Alle Kanten mit einer Steigung zwischen "unendlich" und H/s bekommen dasselbe Maß H/s zugewiesen und sind daher nicht unterscheidbar.

s ist so zu wählen, dass H/s mindestens 5 beträgt.

Zur Bewertung der ganzen Kantenbreite und zur Glättung von Streuungen wird die Höhe an mindestens 20 Orten entlang der Kante gemessen und arithmetisch gemittelt

Bei erfindungsgemäßen Anoden weist das dimensionslose Maß M Werte zwischen 0,5 und 4,5, bevorzugt 1 -4,5, insbesondere bevorzugt 2,5 - 4,5 auf.

Die Erfindung wird nachfolgend anhand der beigefügten Figuren näher erläutert:
Fig. 1 zeigt den Abschnitt einer für das nicht von der Erfindung abgedeckte Sedimentationsformungsverfahren geeigneten Niob- oder Tantalfolie mit ausgeschnittenen Anodenkontaktstrukturen;
Fig. 2 zeigt die Struktur gemäß Fig. 1, wie sie bevorzugt eingesetzt wird;
Fig. 3 zeigt schematisch eine für das Sedimentationsformungsverfahren geeignete Vorrichtung in Aufsicht,
Fig. 4 zeigt einen Schnitt A-A durch die Vorrichtung gemäß Fig. 3;
Fig. 5 zeigt einen Schnitt B-B durch die Vorrichtung gemäß Fig. 4;
Fig. 6 zeigt den Profilometerscan über eine nach dem Schablonendruckverfahren herstellte Pastenbeschichtung.

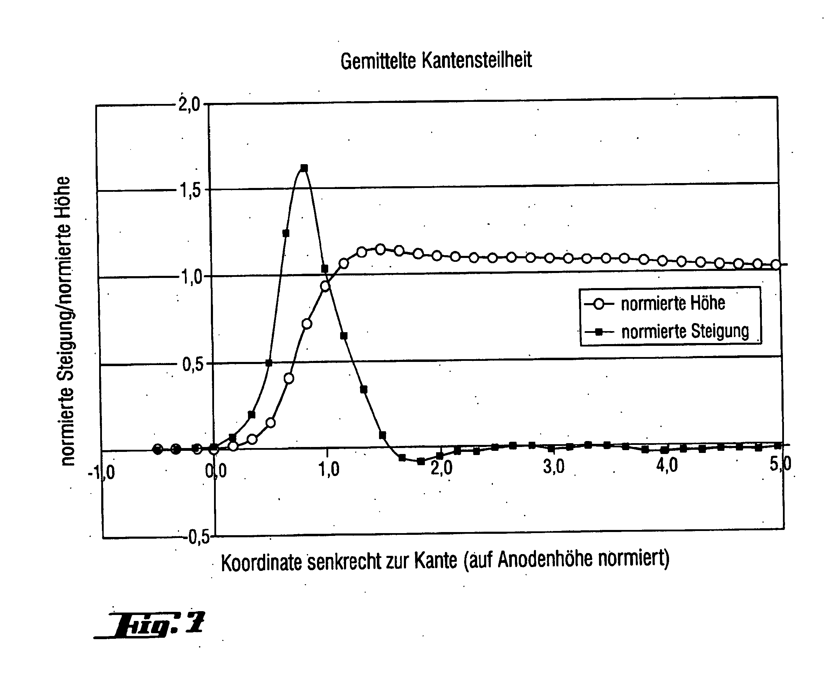

Fig. 7 zeigt den über 20 Messorte gemittelten und auf die mittlere Anodenendhöhe normierten Kantenverlauf und die daraus ermittelte Steigung der Kante einer erfindungsgemäßen Anode.

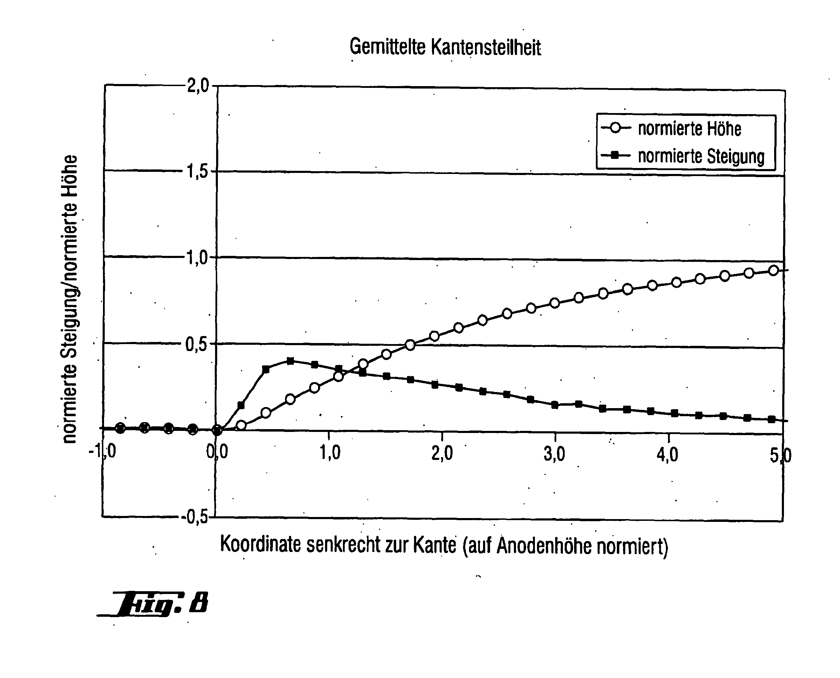

Fig. 8 zeigt den über 20 Messorte gemittelten und auf die mittlere Anodenendhöhe normierten Kantenverlauf und die daraus ermittelte Steigung der Kante einer Vergleichsanode.

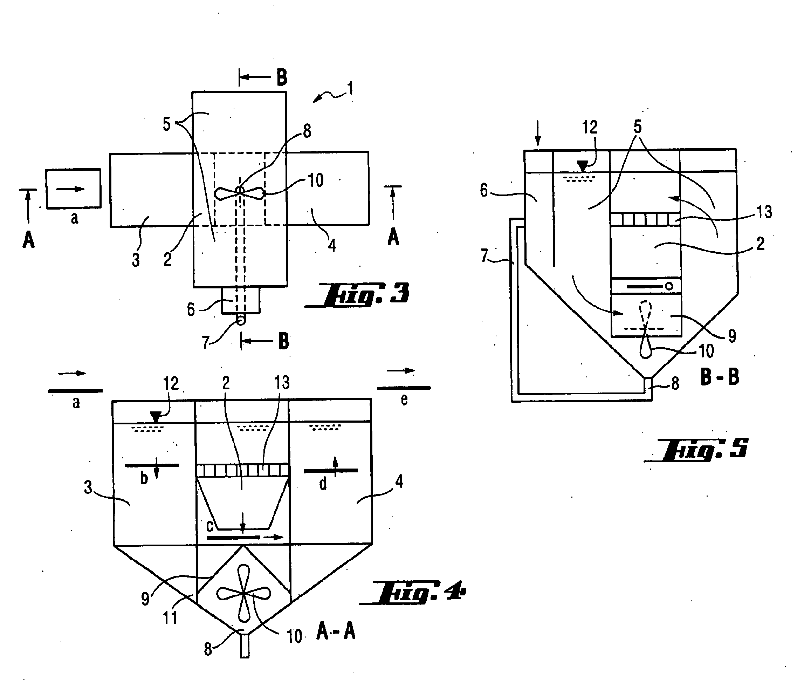

In den Fig. 4 und 5 werden Schnittflächen durch dicke Linien und Sichtlinien durch dünne Linien dargestellt, sofern sich aus dem Zusammenhang nichts anderes ergibt.

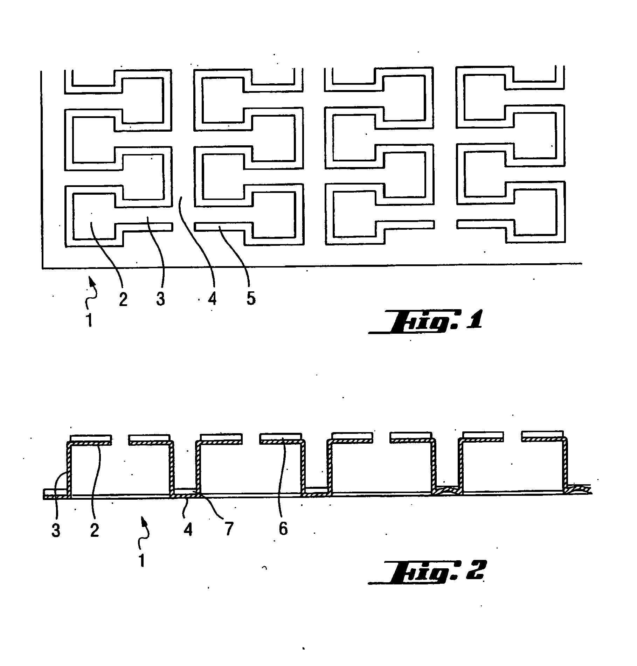

Wie in Fig. 1 dargestellt, können in der Niob- oder Tantal Folie 1 für das nicht erfindungsgemäß Sedimentationsformungsverfahren mäanderförmige Ausschneidungen 5 vorgenommen werden, so dass Anodenkontaktflächen 2 und Anodenkontaktstege 3 gebildet werden, die über Hauptstege 4 miteinander verbunden sind. Eine Folie kann so mehr als 100, vorzugsweise 1000 und mehr, Anodenkontaktflächen 2 aufweisen. Die Ausschneidungen 5 können durch Stanzen oder Laserschneiden erzeugt werden. Die Abmessungen der Anodenkontaktflächen 2 können einige mm in jeder Richtung betragen. Zur Verhinderung von Sedimentation auf den Stegen 3, werden diese, wie in Fig. 2 im Querschnitt dargestellt, sowohl an der Verbindungsstelle zu dem Hauptsteg 4 als auch an der Verbindungsstelle zur Anodenkontaktfläche 2 abgeknickt, so dass die Stege 3 senkrecht nach oben ragen. Mit dem Bezugszeichen 6 ist die auf der Anodenkontaktfläche 2 sedimentierte NbOₓ-Pulverschicht angedeutet. Mit dem Bezugszeichen 7 ist angedeutet, dass das Pulver auch auf den Hauptstegen sedimentiert. Dies kann weitgehend verhindert werden, wenn die Hauptstege 4 abgeknickt werden, wie rechts in Fig. 2 angedeutet. In der beispielhaft schematischen Darstellung der Figuren 1 und 2 sind die Anodenkontaktflächen als ebene Flächen dargestellt. Es ist ebenso möglich die Anodenkontaktflächen löffelartig konvex oder kastenförmig mit umlaufendem Rand auszubilden. Die Anodenkontaktflächen, die beispielhaft rechteckig dargestellt sind, können ferner kreisrund oder oval oder anders ausgebildet sein.

Eine Vorrichtung 1 zur Durchführung des Sedimentationsformungsverfahrens ist in den Figuren 3 bis 5 dargestellt. Sie besteht aus zwei sich kreuzenden Behältern, in deren Kreuzungspunkt sich der Sedimentationsbehälter 2 befindet. Durch den einen der Behälter (Foliendurchgangsbehälter) wird die mit Kleinbuchstaben bezeichnete Folie geführt, wobei sie nacheinander die Positionen a, b, c, d und e (Fig. 4) mit den jeweils durch Pfeile angedeuteten Bewegungsrichtungen einnimmt. Die Folie mit einer Struktur beispielsweise gemäß Fig. 2 wird bei a zugeführt, bei b in dem Einführungsraum 3 unter den Flüssigkeitsspiegel 12 abgesenkt, danach bei c unter dem Auslass des Sedimentationsbehälters durchgeführt, wobei die Sedimentschicht gebildet wird, bei d in dem Ausschleusungsraum 4 über den Flüssigkeitsspiegel 12 angehoben und bei e der nicht dargestellten Ultraschallverdichtung, Trocknung und Sinterung zugeführt.

In dem anderen, quer zu dem ersten Behälter angeordneten Behälter (Fig. 5) wird in dem Strömungsraum 5 die NbOₓ-Pulver enthaltende Suspension mit dem Rührer 10 um den Sedimentationsbehälter 2 herum, wie durch die gekrümmten Pfeile angedeutet, umgepumpt. Aus der umgepumpten Suspensionsströmung oberhalb des Sedimentationsbehälters 2 sinken Pulverteilchen ab und treten in den oben offenen, mit einem Beruhigungsgitter 13 versehenen Sedimentationsbehälter 2 ein. Durch den Frischpulvereinlaß 6 wird kontinuierlich in dem Maße Pulver zugeführt, wie mit ausgeschleusten Folien entnommen wird. Am Boden des Behälters bei 8 abgelagertes Pulver wird über Leitung 7 der Suspension wieder-zugeführt.

Der Foliendurchgangsbehälter 3, 4 ist durch die Winkelabschirmung 9 gegen den Suspensionsumlaufbehälter 5 abgeschirmt (Fig. 4), wobei an der Unterkante der Abschirmung 9 ein Durchgang 11 vorgesehen ist, durch den nicht auf der Folie abgelagertes Pulver wieder in den Suspensionsumlaufraum 5 eintreten kann.

Die Erfindung wird anhand der nachfolgenden Beispiele näher erläutert:

### Vergleichsbeispiel 1:

Es wird ein Niobsuboxidpulver der Formel NbO_{1,07} mit einer BET-Oberfläche von 1,24 m²/g und einer Teilchengrößenverteilung entsprechend D10 = 33 µm, D50 = 107 µm und D90 = 286 µm mit irregulärer Gestalt eingesetzt. Das Pulver besteht aus versinterten Primärteilchen, deren Durchmesser sich visuell aus REM-Aufnahmen zu etwa 620 nm ergibt.

Das Pulver wird gleichmäßig auf die Oberfläche eines mit eine geringe Menge eines Netzmittels enthaltendem Wasser gefüllten Glasbehälters aufgestreut. In der Nähe des Bodens des Behälters wird eine entsprechend Fig. 2 strukturierte Niobfolie einer Dicke von 70 µm mit 64 Anodenkontaktflächen von 6 x 6 mm² an einem Schwenkarm unter einer Abdeckung gehalten. Nach 15 Minuten wird die Folie geschwenkt, so dass sie nicht mehr von der Abdeckung abgedeckt ist.

Nachdem auf den Anodenkontaktflächen eine etwa 0,5 mm dicke Schicht des Pulvers sedimentiert ist, wird die Folie wieder unter die Abdeckung geschwenkt. Es wird kein weiteres Pulver auf die Wasseroberfläche aufgestreut. Nachdem das noch im Wasser dispergierte Pulver sedimentiert ist, wird die Folie entnommen und für 30 Sekunden auf eine durch einen Ultraschallquarz zu Vertikalschwingungen angeregte Platte aufgelegt. Die beschichtete Folie wird dann in einem Trockenofen zunächst für 4 Stunden bei 60°C, danach weitere 4 Stunden bei 80° C und schließlich noch 4 Stunden bei 120°C getrocknet. Die getrocknete Folie wird dann in einen Hochvakuumsinterofen eingebracht, wobei nach Evakuierung des Ofens die Temperatur des Ofens innerhalb einer Stunde auf 1400°C gebracht und bei dieser Temperatur noch 15 Minuten gehalten wird. Anschließend wird auf Raumtemperatur abgekühlt.

Die Anodenkontaktflächen sind oberseitig mit einer fest haftenden, etwas rauen, porösen Niobsuboxidschicht bedeckt. Die Gewichtszunahme der Folie beträgt 4,03 g, d,h, das Durchschnittsgewicht einer Anode (der Beschichtung einer Anodenkontaktfläche) beträgt 63 mg.

Zur Überprüfung der Kondensatoreigenschaften wird die Folie mit den 64 Anoden nach unten in eine 0,1 Gew.-%ige Phosphorsäure eingetaucht, so dass die Stege 3 (Fig. 2) teilweise oberhalb der Säureoberfläche bleiben. Es wird bis zu einer Formierspannung von 30 V bei einer auf 300 mA begrenzten Stromstärke formiert, wobei die Spannung, nach Absinken der Stromstärke auf 0 noch 2 Stunden gehalten wird.

Die Reststrommessung erfolgt gegen 0,1-Gew.%ige Phosphorsäure als Kathode. Die Kapazitätsmessung erfolgt gegen 18-Gew.-%ige Schwefelsäure als Kathode bei einer Bias-Spannung von 10 V und einer Wechselspannung mit einer Frequenz von 120 Hz. Es ergibt sich gemittelt über die 64 Anoden eine spezifische Kapazität von 148.380 µFV/g und ein gemittelter Reststrom von 0,43 nA/µFV.

### Beispiel 1:

Es wird ein Niobsuboxidpulver der Formel NbO_{0,95} mit einer spezifischen Oberfläche von 0,76 m²/g und einer Komgrößenverteilung entsprechend D10 = 0,85 µm, D50 = 2,0 µm, D90 = 8,0 µm und D100 = 36,2 µm eingesetzt.

Eine Paste wird durch Vermischen von
14,3 Gew.-% eines Bindemittels enthaltend 5 Gew.-%
Ethylcellulose N7 in Terpineol,
0,5 Gew.-% MEEE als Netzmittel und
85,2 Gew.-% des NbOₓ-Pulvers
und anschließendes Homogenisieren im Dreiwalzenstuhl hergestellt. Aus der Fließkurve im Scherratenscan (Rotationsmethode) zwischen 10 und 50 s⁻¹, aufgenommen mit einem Kegel-Platte-Meßsystem mit 4° Winkel und 20 mm Durchmesser, der leicht thixotropen Paste ergeben sich Viskositäten von 90 Pas bei 10 s⁻¹ und 5,2 Pas bei 50 s⁻¹.

Mit der Paste werden 3 Niobfolien (Beispiele 1a, 1b und 1c) von 10X10 cm² Größe und einer Dicke von 70 µm mit einer 150 µm dicken Edelstahlschablone mit 108 Aussparungen von 4,6X4,6 mm², die in 6 Doppelreihen à 18 Aussparungen angeordnet sind, auf einer halbautomatischen Druckmaschine EKRA M2 bedruckt. Der Auftrag erfolgt mit einer Gummirakel mit einer Härte von 90 Shore. Rakeldruck und Rakelgeschwindigkeit, sowie die auf der Folie aufgebrachte Pastenmasse sind wie folgt:
Beispiel 1a: 50 N, 60 mm/s, 0,997 g
Beispiel 1b: 70 N, 80 mm/s, 0,946 g und
Beispiel 1c: 30 N, 40 mm/s, 1,061 g.

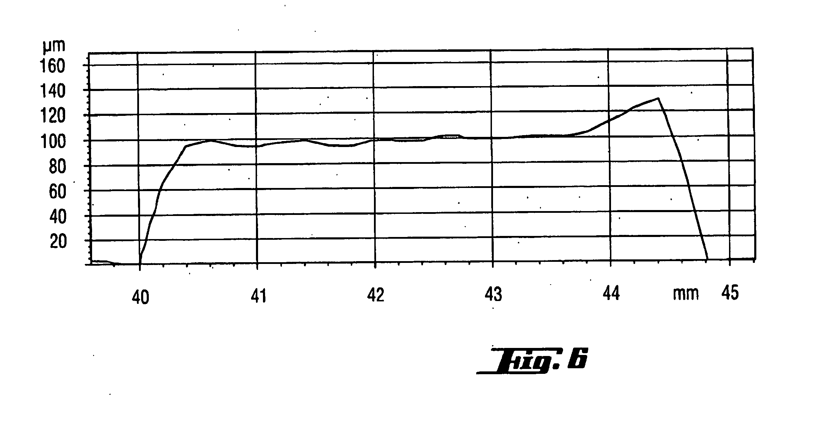

Die bedruckten Folien werden im Umluftrockenschrank bei 80°C für 1 Stunde getrocknet. Die getrockneten Strukturen werden mittels Laser-Profilometer geometrisch charakterisiert Fig. 6 zeigt das Dickenprofil der getrockneten Pastendrucks von Beispiel 1b. In Vorschubrichtung der Rakel ergibt sich ein leichter Dickenanstieg (rechts in Fig. 6).

Die getrockneten bedruckten Folien werden in einem Arbeitsgang mit folgender Aufheizkurve in einem Hochtemperatur-Hochvakuum-Ofen von dem Binder befreit und gesintert:
von Raumtemperatur auf 350°C: 25K/min,
bei 350°C: 15 min halten,
von 350 auf 800°C: 25K/min,
von 800 auf 1050°C: 5K/min,
von 1050°C auf Endtemperatur: 25K/min und
bei Endtemperatur 15 min halten.

Es wird je eine Folie bei 1300°C, 1370°C und 1440°C (Endtemperatur) gesintert. Die Haftung der Anoden ist an allen Folien gut. Beim Schlagen der Folien auf die Tischkante können keine Absplitterungen festgestellt werden.

Die auf der Folie angeordneten Anoden werden durch Sägen (Sägeblatt 45-NIR(S)) vereinzelt und wie in Vergleichsbeispiel 1 hinsichtlich ihrer Kondensatoreigenschaften untersucht. Es ergeben sich als Mittelwert von je 10 Anoden folgende Werte:
Beispiel 1a: 83.687 µFV/g, 0,203 nA/µFV,
Beispiel 1b: 75.506 µFV/g, 0.158 nA/µFV und
Beispiel 1c: 94.620 µFV/g, 0,386 nA/µFV.

Der Kohlenstoffgehalt liegt bei allen Anoden unterhalb 15 ppm, und zwar bei den Anoden von Beispiel 1a zwischen 4 und 6,4 ppm, bei denen von Beispiel 1b zwischen 5,2 und 7,3 ppm und bei den Anoden von Beispiel 1c zwischen 3,7 und 5,8 ppm.

## Patentansprüche

1. Verfahren zur Herstellung eines Festelektrolytkondensators mit einer Anode aus versintertem feinteiligen Pulver aus NbOₓ mit 0,5<x<1,7 durch Formung eines Anodengrünkörpers, Sintern zu einem Anodenkörper, Formieren und Versehen des formierten Anodenkörpers mit einer Kathode, wobei die Formung des Grünkörpers ohne Anwendung von Druck erfolgt, **dadurch gekennzeichnet, dass** die Formung durch Aufbringen einer Paste mit dem NbOₓ-Pulver und einem organischem Bindemittel auf ein flächig ausgebildetes Niob- oder Tantalblech, Trocknen der Paste und Entfernen des Bindemittels durch Erhitzen auf eine Temperatur im Bereich von 350 bis 550°C erfolgt.

2. Verfahren nach Anspruch 1, wobei die Paste durch Schablonendruck aufgebracht wird.

3. Verfahren nach Anspruch 1 oder 2, wobei das NbOₓ-Pulver eine Korngrößenverteilung von D10 = 0,5 bis 1,5 µm, D50 = 1,5 bis 3 µm und D90 = 7 bis 12 µm aufweist.

4. Verfahren nach einem der Ansprüche 1 bis 3, wobei die Paste eine aus der Fließkurve im Scherratenscan (Rotationsmethode) zwischen 10 und 50 s⁻¹, aufgenommen mit einem Kegel-Platte-Meßsystem mit 4° Winkel und 20 mm Durchmesser, ermittelte Viskosität von 80 bis 100 Pas bei 10 s⁻¹ und 3,5 bis 10 Pas bei 50 s⁻¹ aufweist.

5. Verfahren nach einem der Ansprüche 1 bis 4, wobei der elastische Anteil der Viskosität der Paste am Fließpunkt 500 - 15000 Pas beträgt und der viskose Anteil der Viskosität mindestens 0,5 und höchstens 1,5-fach so groß ist wie der elastische Anteil der Viskosität am Fließpunkt.

6. Verfahren nach einem der Ansprüche 1 bis 5, wobei sich der elastische Anteil der Viskosität der Paste bei einer mindestens dreifach höheren Schubspannung als am Fließpunkt um mindestens 50% und der viskose Anteil auf unter 2500 Pas verringert.

7. Verfahren nach einem der Ansprüche 1 bis 6, wobei
der elastische Anteil der Viskosität 5 Sekunden nach Rücknahme der Schubspannung auf einen Wert unter einem Drittel der Schubspannung am Fließpunkt auf 25 bis 90% des Wertes vor Anlegen der erhöhten Schubspannung aufgebaut ist und
der viskose Anteil der komplexen Viskosität 5 Sekunden nach Rücknahme der Schubspannung mindestens noch 1,25-fach und höchstens 10-fach größer als der elastische Anteil der komplexen Viskosität ist.

8. Flächig ausgedehnter Anodenkörper, wobei die Anode aus einer schwammartig versinterten flächigen Struktur aus Niobsuboxid NbOₓ mit 0,5 < x < 1,7 besteht und die eine entsprechend flächig ausgedehnte Anodenkontaktfolie aus Niob und/oder Tantal aufweist, wobei der Kohlenstoffgehalt der Anodenstruktur weniger als 25 ppm, vorzugsweise weniger als 15 ppm beträgt.

9. Flächig ausgedehnter Anodenkörper nach Anspruch 8, wobei die mittlere, auf die Höhe des Anodenkörpers normierte Steigung der Anodenkanten im Bereich von 0,5 bis 4,5, liegt.

10. Anodenkörper nach Anspruch 8, mit einer flächigen Ausdehnung in beiden Richtungen von 2 bis 8 mm und einer Dicke von 0,05 bis 1 mm ohne Anodenkontaktfolie.

## Claims

1. Process for producing a solid electrolyte capacitor having an anode of a sintered fine NbOₓ powder, where 0.5 < x < 1.7, by forming an anode green body, sintering so as to provide an anode body, electrolytically oxidizing, and providing the electrolytically oxidized anode body with a cathode, wherein the forming of the green body is performed without applying a pressure, **characterized in that** the forming is performed by applying a paste having the NbOₓ powder and an organic binder to a two-dimensional niobium or tantalum sheet, drying the paste, and removing the binder by heating to a temperature in the range from 350 to 550 °C.

2. Process according to Claim 1, wherein the paste is applied by stencil printing.

3. Process according to Claim 1 or 2, wherein the NbOₓ powder has a particle size distribution of D10 = 0.5 to 1.5 µm, D50 = 1.5 to 3 µm, and D90 = 7 to 12 µm.

4. Process according to any of Claims 1 to 3, wherein the paste has a viscosity of 80 to 100 Pas at 10 s⁻¹ and 3.5 to 10 Pas at 50 s⁻1^{,} determined from a flow curve in a shear rate scan (rotation method) of between 10 and 50 s⁻¹, recorded with a cone-plate analysis system at an angle 4° and a diameter 20 mm.

5. Process according to any of Claims 1 to 4, wherein the elastic component of the viscosity of the paste at the yield point is 500-15000 Pas, and the viscous component of the viscosity is at least 0.5 and at most 1.5 times as great as the elastic component of the viscosity at the yield point.

6. Process according to any of Claims 1 to 5, wherein the elastic component of the viscosity of the paste at a shear stress at least three times higher than at the yield point is reduced by at least 50 %, and the viscous component is reduced to less than 2500 Pas.

7. Process according to any of Claims 1 to 6, wherein
the elastic component of the viscosity, 5 seconds after reduction in the shear stress to a value below one third of the shear stress at the yield point, is built up to 25 to 90 % of the value before application of the elevated shear stress, and
the viscous component of the complex viscosity, 5 seconds after reduction of the shear stress, is still at least 1.25 times and at most 10 times greater than the elastic component of the complex viscosity.

8. Two-dimensionally extended anode body, wherein the anode consists of a sponge-like sintered two-dimensional structure of niobium suboxide NbOₓ, where 0.5 < x < 1.7, and has a corresponding two-dimensionally extended anode contact foil of niobium and/or tantalum, wherein the carbon content of the anode structure is less than 25 ppm, preferably less than 15 ppm.

9. Two-dimensionally extended anode body according to Claim 8, wherein the mean slope of an anode edge, normalized to a height of the anode body, is in the range from 0.5 to 4.5.

10. Anode body according to Claim 8 having a two-dimensional extension in both directions of 2 to 8 mm and a thickness of 0.05 to 1 mm, excluding the anode contact foil.

## Revendications

1. Procédé de fabrication d'un condensateur à électrolyte solide doté d'une anode en poudre fine frittée de NbOₓ avec 0,5 < x < 1,7, en formant un corps cru d'anode, en le frittant en un corps d'anode, en oxydant électrolytiquement le corps d'anode et en dotant le corps d'anode oxydé électrolytiquement d'une cathode, la formation du corps cru s'effectuant sans appliquer de pression,
**caractérisé en ce que**
la formation s'effectue en appliquant une pâte avec la poudre de NbOₓ et avec un liant organique sur une tôle plate de niobium ou de tantale, en séchant la pâte et en enlevant le liant par chauffage à une température comprise dans la plage de 350 à 550°C.

2. Procédé selon la revendication 1, dans lequel la pâte est appliquée par impression au pochoir.

3. Procédé selon les revendications 1 ou 2, dans lequel la poudre de NbOₓ présente une distribution granulométrique avec D10 = 0,5 à 1,5 µm, D50 = 1,5 à 3 µm et D90 = 7 à 12 µm.

4. Procédé selon l'une des revendications 1 à 3, dans lequel la pâte présente une viscosité de 80 à 100 Pas à 10 s⁻¹ et de 3,5 à 10 Pas à 50 s⁻¹, déterminée entre 10 et 50 s⁻¹ à partir de la courbe d'écoulement dans un scanner à taux de cisaillement (méthode rotative), avec un système de mesure à cône et plaque d'un angle de 4° et d'un diamètre de 20 mm.

5. Procédé selon l'une des revendications 1 à 4, dans lequel au point d'écoulement, la fraction élastique de la viscosité de la pâte est de 500 à 15 000 Pas et la fraction visqueuse de la viscosité est de 0,5 et d'au plus 1,5 fois la fraction élastique de la viscosité au point d'écoulement.

6. Procédé selon l'une des revendications 1 à 5, dans lequel à une contrainte de poussée au moins trois fois plus élevée qu'au point d'écoulement, la fraction élastique de la viscosité de la pâte diminue d'au moins 50 % et la fraction visqueuse à moins de 2 500 Pas.

7. Procédé selon l'une des revendications 1 à 6, dans lequel 5 secondes après le retour de la contrainte de poussée à une valeur située en dessous du tiers de la contrainte de poussée au point d'écoulement, la fraction élastique de la viscosité s'est établie à entre 25 à 90 % de la valeur avant l'application de la contrainte de poussée accrue et dans lequel 5 secondes après le retour de la contrainte de poussée, la fraction visqueuse de la viscosité complexe est d'au moins encore 1,25 fois et d'au plus 10 fois plus élevée que la fraction élastique de la viscosité complexe.

8. Corps d'anode à extension de surface, dans lequel l'anode est constituée d'une structure plate frittée en éponge de sous-oxyde de niobium NbOₓ avec 0,5 < x < 1,7 et d'un film de contact d'anode en niobium et/ou en tantale dont l'extension de surface est correspondante, la teneur en carbone de la structure d'anode étant inférieure à 25 ppm et de préférence inférieure à 15 ppm.

9. Corps d'anode à extension de surface selon la revendication 8, dans lequel la pente moyenne des bords de l'anode, normée par rapport à la hauteur du corps d'anode, est comprise entre 0,5 et 4,5.

10. Corps d'anode selon la revendication 8, dont l'extension de surface dans les deux directions est de 2 à 8 mm et l'épaisseur de 0,05 à 1 mm sans film de contact d'anode.
